# EUROPÄISCHE PATENTANMELDUNG

(11) **EP 4 527 204 A1**
(43) Veröffentlichungstag der Anmeldung: **26.03.2025**
(21) Anmeldenummer: 24201709.3
(22) Anmeldetag: 20.09.2024
(51) Int. Cl.: A21C 9/08, A21C 5/00, A21C 9/04, A21C 15/00

(54) **VORRICHTUNG UND VERFAHREN ZUM FÜLLEN UND/ODER PORTIONIEREN VON LEBENSMITTELMASSE AUF EINEM TRÄGER**

(30) Priorität: 21.09.2023 DE 102023125663
(71) Anmelder: VEMAG Maschinenbau GmbH, 27283 Verden/Aller (DE)
(72) Erfinder: Lewin, Alexander, 27283 Verden (DE); Wagner, Mitja, 27313 Dörverden (DE); Frese, Jens, 27321 Thedinghausen (DE); Meinke, Steffan, 27283 Verden (DE)
(74) Vertreter: Eisenführ Speiser

(57) **Zusammenfassung**

Die Erfindung betrifft eine Vorrichtung (1) zum Füllen und/oder Portionieren von Lebensmittelmasse auf einem Träger (2), mit einem Maschinen-Gestell (4), einem an dem Gestell (4) bewegbar angeordneten Träger (2) zum Aufnehmen abgegebener Lebensmittelmasse, und einer Antriebseinrichtung (22) zum Bewegen des Trägers (2). Erfindungsgemäß ist
- eine mechanische Trenneinrichtung (12) zum mechanischen Trennen von Träger (2) und Antriebseinrichtung (22) vorgesehen,
- der Träger (2) oberhalb von der Trennreinrichtung (12) angeordnet,
- die Antriebseinrichtung (22) wenigstens teilweise unterhalb der Trenneinrichtung (12) angeordnet,
- und sind der Träger (2) und die Antriebseinrichtung (22) mit Hilfe von magnetischen und/oder elektromagnetischen Mitteln derart gekoppelt, dass durch magnetische oder elektromagnetische Kraft der Träger (2) durch die Antriebseinrichtung (22) bewegbar.

Zudem betrifft die Erfindung ein Verfahren zum Füllen und/oder Portionieren von Lebensmittelmasse auf einem Träger (2), insbesondere unter Verwendung einer Vorrichtung (1) nach mindestens einem der vorstehenden Ansprüche.

## Beschreibung

Die vorliegende Erfindung betrifft eine Vorrichtung zum Füllen und/oder Portionieren von Lebensmittelmasse auf einem Träger, mit einem Maschinen-Gestell, einem an dem Gestell bewegbar angeordneten Träger zum Aufnehmen abgegebener Lebensmittelmasse, und einer Antriebseinrichtung zum Bewegen des Trägers.

Die vorliegende Erfindung betrifft ferner ein Verfahren zum Füllen und/oder Portionieren von Lebensmittelmasse auf einem bewegbaren Träger.

Derartige Vorrichtungen sind im Stand der Technik bekannt, beispielsweise beim Produzieren von Keksen oder Bereitstellen anderer Portionen aus Lebensmittelmasse in einer bestimmten Anordnung auf Blechen, in Gläsern oder anderen Verpackungen. Eine Abgabevorrichtung zum Abgeben von Lebensmittelmasse stellt dabei einen Strang oder einzelne Portionen von Lebensmittelmasse bereit und ist insoweit als in der Lebensmitteltechnik in verschiedenen Ausführungsformen bekannte Portioniereinheit ausgebildet, um separate Portionen einer Lebensmittelmasse zu produzieren und auf einem Träger wie einem Blech oder dergleichen abzulegen. Neben dem Bereitstellen entsprechender Portionen ist es auch möglich, auf dem Träger angeordnete Verpackungen zu füllen mit einer Lebensmittelmasse. Bei einer Vorrichtung oder Maschine zum Herstellen von Keksen werden einzelne geformte Keks-TeigPortionen zunächst auf einem Förderband bereitgestellt und von diesem auf einen Träger, beispielsweise ein Backblech übergeben. Auf diesem werden die Portionen in mehreren Reihen nebeneinander abgelegt. Der als Blech ausgebildete Träger ist an einem Maschinen-Gestell in eine Richtung bewegbar gelagert, so dass nacheinander neue Reihen von Keks-Portionen auf dem Blech abgelegt werden. Bei dieser Maschine wird das Blech, auf dem die Keks-Portionen angeordnet werden sollen, relativ zu der als Portioniereinheit ausgebildeten Abgabevorrichtung bewegt.

Alternativ gibt es auch bekannte Vorrichtungen, bei denen eine Abgabevorrichtung oder Portioniereinheit relativ zu einem Träger, beispielsweise einem Blech, bewegt wird. Zu diesem Zweck kann beispielsweise die Abgabevorrichtung zum Abgeben einer fließfähigen Lebensmittelmasse mithilfe von Antriebseinrichtungen oberhalb des Trägers verfahren werden, insbesondere wenigstens innerhalb einer Ebene in zwei Richtungen, die als X und Y-Achse bezeichnet werden können.

Eine Schwierigkeit bei Vorrichtungen, bei denen eine Abgabevorrichtung oder Portioniereinheit relativ zu einem Träger oberhalb dessen bewegt werden muss, besteht darin, dass die fließfähige Lebensmittelmasse durch eine Leitung, beispielsweise einen flexiblen Schlauch zu der Abgabevorrichtung zum Abgeben der fließfähigen Lebensmittelmasse häufig über längere Strecken zugeführt werden muss. Dadurch wird die Qualität des Produktes negativ beeinflusst. Ferner muss die Leitung über eine längere Strecke geführt werden.

Bei Vorrichtungen, bei denen der Träger relativ zu einer Abgabevorrichtung wie einer Portioniereinheit bewegt wird, ist ein nicht geringer apparativer Aufwand nötig. So kann beispielsweise ein als Blech ausgebildeter Träger mithilfe eines Förderbandes in eine Richtung bewegt werden, sodass sukzessive Portionen der Lebensmittelmasse auf dem Träger abgelegt werden können, beispielsweise in einer oder in mehreren benachbarten Reihen. Hier kann der Nachteil entstehen, dass Teile der Lebensmittelmasse ungewollt in den Bereich eines Förderbandes oder anderer Förderenrichtung geraten. Dies kann hygienische Probleme mit sich bringen. Auch kann es eine Limitierung hinsichtlich der Bewegungsrichtung geben, insbesondere dann, wenn ein Förderband eine Bewegung nur in eine Richtung zulässt. Dies kann die Art und Weise des Ablegens von Portionen der Lebensmittelmasse auf einem Träger wie einem Blech limitieren. Beliebige Muster oder Anordnungen einzelner Lebensmittel-Portionen auf einem Träger können so nicht erzeugt werden.

Aufgabe der vorliegenden Erfindung ist es, eine Vorrichtung und ein Verfahren zum Füllen und/oder Portionieren von Lebensmittelmasse auf einem bewegbaren Träger anzugeben, mit der die Träger flexibel und zuverlässig bewegt werden können und die einfach reinigbar und hygienisch sind. Insbesondere soll auch erreicht werden, Portionen von Lebensmittelmasse in verschiedenen Anordnungen auf dem Träger anordnen zu können oder eine bereitgestellte Verpackung zu füllen mit Lebensmittelmasse.

Die Erfindung löst die Aufgabe bei einer Vorrichtung der eingangs genannten Art dadurch, dass
- eine mechanische Trenneinrichtung zum mechanischen Trennen von Träger und Antriebseinrichtung vorgesehen ist,
- dass der Träger oberhalb von der Trennreinrichtung angeordnet ist,
- die Antriebseinrichtung wenigstens teilweise unterhalb der Trenneinrichtung angeordnet ist,
- und dass der Träger und die Antriebseinrichtung mit Hilfe von magnetischen und/oder elektromagnetischen Mitteln derart gekoppelt sind, dass durch magnetische oder elektromagnetische Kraft der Träger durch die Antriebseinrichtung bewegbar ist.

Durch die erfindungsgemäße Trenneinrichtung wird eine weitgehende oder vollständige mechanische Trennung von Träger und Antriebseinrichtung zum Bewegen des Trägers erreicht. Dadurch kann vermieden werden, dass Lebenmittelmasse von einer Abgabevorrichtung oder Portioniervorrichtung in den Bereich der Antriebseinrichtung zum Bewegen des Trägers gelangt. Dies hat deutlich hygienische Vorteile. Eine Verschmutzung von Teilen der Antriebseinrichtung wird so zuverlässig verhindert. Der Träger ist oberhalb von der mechanischen Trenneinrichtung und die Antriebseinrichtung wenigstens teilweise unterhalb der Trenneinrichtung angeordnet. Eine Übertragung einer erforderlichen Kraft zum Bewegen des Trägers für die vorzugsweise portionierten Lebensmittelmassen wird erfindungsgemäß mithilfe von magnetischen und/oder elektromagnetischen Mitteln und Kräften bewirkt. Zu diesem Zweck sind Träger, die mechanische Trenneinrichtung und die Antriebseinrichtung so ausgebildet und konfiguriert, dass eine magnetische oder elektromagnetische Kraft durch die mechanische Trenneinrichtung hindurch übertragen und auf den Träger aufgebracht wird. Die Antriebseinrichtung weist zu diesem Zweck beispielweise bewegbare Magnete, vorzugsweise Permanentmagnete, und/oder alternativ bewegbare Induktionsspulen auf, die eine magnetische Kraftübertragung auf entsprechend ausgebildete Abschnitte des Trägers selbst oder an dem Träger angeordnete Bauteile wie Magnete oder elektromagnetische Spulen bewirken. So kann durch die mechanische Trenneinrichtung hindurch eine Antriebskraft magnetischer Art von der Antriebseinrichtung auf den Träger übertragen werden. Die unterhalb von der mechanischen Trenneinrichtung angeordneten Bauteile der Antriebseinrichtung wie beispielsweise eine bewegliche Mechanik oder Kinematik, Motoren wie beispielsweise Elektromotoren oder Führungen, beispielsweise Linearführungen, sind somit mechanisch und somit auch unter hygienischen Gesichtspunkten getrennt von den Trägern und der Lebensmittelmasse, die durch die erfindungsgemäße Vorrichtung verarbeitet werden soll. Mit anderen Worten kann die Antriebseinrichtung und dazu gehörende bewegliche Mechanik oder andere Bauteile eingehaust werden und hygienisch getrennt werden von den zu verarbeiteten Lebensmittelmassen. Des Weiteren kann mithilfe der magnetischen und/oder elektromagnetischen Mittel die Kraft zum Bewegen der Träger derart flexibel auf den Träger aufgebracht werden, dass dieser einfach bei Bedarf in mehreren Richtungen, beispielsweise in X und Y-Richtung bewegt werden kann. Dabei kann auch vermeiden werden, dass die Abgabevorrichtung oder Portioniereinheit zum Bereitstellen der Lebensmittel selbst bewegbar ausgebildet ist. Stattdessen kann diese ortsfest montiert sein, beispielsweise an dem Maschinen-Gestell oder anderen Gestellen benachbart zu der Vorrichtung. Erfindungsgemäß können Portionen von Lebensmittelmasse auf einem Träger bereitgestellt werden oder auch Verpackungen gefüllt werden mit Lebensmittelmasse. Ein weiterer Vorteil der Erfindung ist, dass die Kopplung bei Überschreitung einer bestimmten Kraft aufgelöst werden kann oder mit anderen Worten Antriebseinrichtung und Träger bei Überschreitung einer bestimmten Kraft entkoppelt werden. Dies kann dadurch verwirklicht werden, dass durch entsprechende Dimensionierung der magnetischen und/oder elektromagnetischen Mittel, insbesondere Dimensionierung eines Permanent-Magneten, nur Kräfte bis zu einer bestimmten Größe übertragen werden können und dann, wenn diese mit magnetischen Mitteln erzeugten Kräfte überschritten werden, die bewegbar angeordneten Träger nicht mehr weiterbewegt werden. Dadurch erhöht sich die Sicherheit der Vorrichtung, denn wenn beispielsweise ein Mensch in Kontakt mit dem bewegten Träger kommt und dann eine bestimmte Kraft überschritten wird, wird der Träger nicht mehr mit größerer Kraft fortbewegt. So können die auf den Menschen einwirkenden Kräfte begrenzt werden und so können dann mögliche Verletzungen, z.B. durch Quetschen oder Abscheren, erfindungsgemäß verhindert werden.

Gemäß einer besonders bevorzugten Ausführungsform wird vorgeschlagen, dass die mechanische Trenneinrichtung als Platte mit einer im Wesentlichen ebenen oberen Oberfläche ausgebildet ist und der Träger im Betrieb auf der Platte aufliegt und im Betrieb entlang dieser mittels der Antriebseinrichtung bewegbar ist. Durch eine solche ebene Platte lässt sich die mechanische Trenneinrichtung einfach für hohe Hygieneanforderungen herstellen. Der Träger liegt auf der vorzugsweise ebenen, glatten Oberfläche auf und lässt sich dort hin und her verschieben. Dabei werden bevorzugt Materialien gewählt, die eine geringe Reibung aufweisen, sodass die Magnet-Kräfte (oder elektromagnetische Kräfte) zum Bewegen des Trägers auf der Platte klein gehalten werden können. Der Träger kann insbesondere als ein Blech aus Metall oder auch anderen Materialien wie Kunststoff ausgebildet sein. Der Träger kann auch aus einem solchen Material sein, dass er mithilfe von magnetischen Kräften unmittelbar erfasst und bewegt werden kann. Alternativ kann auch an dem Träger ein Magnet befestigt sein, der zusammen wirkt mit einem Magneten, der Teil der Antriebseinrichtung ist.

Bevorzugt ist die mechanische Trenneinrichtung ausgebildet aus beispielsweise folgenden Materialien: Gemäß einer bevorzugten Ausführungsform ist vorgesehen, dass die Platte aus einem nicht magnetischen Werkstoff, insbesondere Metall, einer Metalllegierung, insbesondere aus nicht rostendem Stahl, oder Kunststoff ausgebildet ist und mittelbar oder unmittelbar an dem Maschinen-Gestell gelagert ist. Diese Materialien können gut magnetische Kräfte bereitstellen und erfüllen hohe Hygieneanforderungen von Lebensmittelmaschinen.

Eine weitere bevorzugte Ausführungsform sieht vor, dass die Antriebseinrichtung einen Magnet-Träger und mindestens einen unterhalb von der Trenneinrichtung angeordneten Permanent-Magneten oder Elektro-Magneten aufweist, welcher an dem Magnet-Träger der Antriebseinrichtung angeordnet ist. Ein Permanentmagnet oder Elektro-Magnet lässt sich gut an einem entsprechenden Magnet-Träger, der Teil der Antriebseinrichtung unterhalb der mechanischen Trenneinrichtung ist, befestigen. So kann beispielsweise ein zylindrischer Permanentmagnet in einem Magnet-Träger mit einem entsprechend geformten zylindrischen Hohlraum ausgebildet sein, in dem der Magnet angeordnet ist. Auch andere Formen sind hier denkbar und zweckmäßig.

Gemäß einer bevorzugten Weiterbildung wird vorgeschlagen, dass die Antriebseinrichtung eine mechanische und/oder elektrische Führungseinheit zum Verfahren des Magneten in X/Y-Richtung im Wesentlichen in einer Ebene unterhalb der Trenneinrichtung aufweist. Die Antriebseinrichtung weist demgemäß eine Führungseinheit zum beliebigen hin- und her verfahren des Magneten in einer insbesondere horizontalen Ebene in X/Y-Richtung auf. Der Magnet ist vorzugsweise relativ dicht an einem entsprechend magnetisch wirksamen Teil oder Bauteil im Bereich des Trägers für die Lebensmittelmasse angeordnet. Zu diesem Zweck ist es vorteilhaft, wenn die Trenneinrichtung als eine relativ dünne Platte oder ein relativ dünnes Bauteil mit einer Dicke von beispielsweise 1 bis 15 mm ausgebildet ist, nämlich vorzugsweise 1-5 mm bei einer metallischen Platte und 5-15 mm bei einer Platte aus Kunststoff, wobei erfindungsgemäß diese Maße nicht beschränkend zu verstehen sind.

Zum Verfahren in X/Y-Richtung weist die Antriebseinrichtung zweckmäßigerweise mindestens zwei unabhängig antreibbare Motoren, insbesondere Elektro-Motoren zum Verfahren durch Antreiben und Betätigen der Führungseinheit auf. So lassen sich beliebige Bewegungen in X und Y-Richtung verwirklichen. Zu diesem Zweck sind die Motoren der Antriebseinrichtung bevorzugt mit einer Steuerung gekoppelt. So lassen sich beliebige oder nahezu beliebige Muster von Lebensmittel-Portionen auf dem Träger, insbesondere einem Blech oder dergleichen, innerhalb von Gläsern oder anderen Verpackungen realisieren. Die Lebensmittel-Portionen können in mehreren Reihen oder auch versetzt zueinander in X und/oder Y-Richtung auf dem Träger positioniert werden durch entsprechendes Verfahren des Magneten, sodass der Träger entsprechend verfahren wird relativ zu der Abgabevorrichtung zum Abgeben der Lebensmittelmasse oder einer Portioniereinheit.

Es hat sich als vorteilhaft und zweckmäßig erwiesen, dass die Führungseinheit als Delta-Mechanik mit zwei Antrieben ausgebildet ist. Dabei wird gemäß einer bevorzugten Ausführungsform vorgeschlagen, dass die Delta-Mechanik zwei Gelenkarme aufweist, wobei jeder Gelenkarm einen ersten drehbar gelagerten und mittels eines Motors verschwenkbaren ersten Arm und einen zweiten, drehbar an dem ersten Arm gelagerten zweiten Arm aufweist, wobei der zweite Arm seinerseits drehbar an dem Magnet-Träger angelenkt ist. So lässt sich eine zuverlässig arbeitende und flexibel betreibbare Antriebseinrichtung mit Führungseinheit zum Verfahren eines Magneten oder einer Magnetspule realisieren.

Gemäß einer alternativen Ausführungsform wird vorgeschlagen, dass die Führungseinheit zwei Linear-Führungen und zwei Antriebe zum Verfahren des Magnet-Trägers in X/Y-Richtung aufweist. Vorzugsweise sind die Linear-Führungen mit ihren Längsachsen im Wesentlichen senkrecht zueinander angeordnet.

Eine weitere bevorzugte Ausführungsform der Erfindung sieht vor, dass der Magnet-Träger eine Ausnehmung aufweist, innerhalb welcher der mindestens eine Magnet unmittelbar unterhalb der Unterseite der Trenneinrichtung angeordnet ist, sodass eine einfache und zuverlässige Befestigung erreicht ist.

Bevorzugt ist es, dass auch der oberhalb von der Trenneinrichtung angeordnete Träger mindestens einen Permanent-Magneten aufweist. Zweckmäßigerweise wird vorgeschlagen, dass der mindestens eine an dem Träger angeordnete Magnet innerhalb einer an der Unterseite des Trägers angeordneten Ausnehmung angeordnet ist und unmittelbar oberhalb von der Trenneinrichtung angeordnet ist, um im Betrieb mit mindestens einem Magneten der Antriebseinrichtung in Betrieb zusammenzuwirken und durch magnetische Kraft gekoppelt ist.

Gemäß der Erfindung bevorzugt ist es, eine Abgabevorrichtung zum Abgeben von Lebensmittelmasse vorzusehen, die derart an oder relativ zu dem Maschinen-Gestell angeordnet ist, dass abgegebene Lebensmittelmasse auf dem bewegbaren Träger landet.

Die erfindungsgemäße Vorrichtung oder Maschine weist des Weiteren vorzugsweise eine Steuerung auf, die eingerichtet ist, die Antriebseinrichtung zum Bewegen des Trägers und die Abgabevorrichtung zum Abgeben von Lebensmittelmasse zu anzusteuern, dass Lebensmittelmasse in Portionen auf dem Träger produziert werden können.

Besonders bevorzugt ist es, dass die Steuerung die Antriebseinrichtung und die Abgabevorrichtung so ansteuert, dass separate Portionen von Lebensmittelmasse in unterschiedlichen Anordnungen und/oder Mustern auf dem Träger produziert werden, insbesondere in mehreren Reihen oder X- und/oder Y-Richtung versetzt zueinander angeordnet sind.

Gemäß einem weiteren Aspekt wird die Aufgabe der Erfindung gelöst durch eine Vorrichtung mit den Merkmalen des Anspruchs 17, die dadurch ausgezeichnet ist, dass die Linear-Führungen oder die Gelenkarme im Wesentlichen innerhalb einer Ebene angeordnet sind, welche unterhalb einer durch den Träger definierten Ebene angeordnet sind. Gemäß diesem Aspekt der Erfindung ist alternativ entweder eine Linear-Führungs-Anordnung mit zwei Linear-Führungen oder sind Gelenkarme vorgesehen, die es erlauben, dass aufgrund einer Kopplung der Träger bewegt wird, wobei die Linear-Führungen oder Gelenkarme im Wesentlichen in einer Ebene unterhalb einer durch den Träger definierten Ebene angeordnet sind. Dadurch ist ermöglicht, dass der Träger oben angeordnet ist und bereit ist entweder unmittelbar oder unter Zwischenschaltung eines Blechs oder eines Behälters Lebensmittelmasse aufzunehmen, während die Antriebseinrichtung und die Führungseinheit darunter, also unten angeordnet sind. Dadurch ist eine saubere Trennung möglich. Die Kopplung der Antriebseinrichtung und der Träger können mit verschiedenen mechanischen, elektrischen und/oder magnetischen Mitteln erfolgen. Besonders bevorzugt ist ein Ausführungsbeispiel der zuvor beschriebenen Art bzw. der Erfindung gemäß dem ersten Aspekt (Ansprüche 1 bis 16).

Zweckmäßigerweise ist die Ebene der Linear-Führungen oder der Gelenkarme im Wesentlichen parallel zu einer durch den Träger definierten Ebene, vorzugsweise im Wesentlichen horizontal, angeordnet.

Gemäß eines weiteren Aspekts wird die Aufgabe gelöst durch eine Vorrichtung mit den Merkmalen des Anspruchs 19, die dadurch gekennzeichnet ist, dass die Antriebseinrichtung eine Führungseinheit aufweist, die als Delta-Mechanik mit mindestens zwei Gelenkarmen und drei Antrieben ausgebildet ist, dass die Führungseinheit und der Träger miteinander gekoppelt sind, derart, dass der Träger im Wesentlichen innerhalb einer Ebene in X/Y-Richtung verfahrbar ist und mittels Ansteuerung der Antriebe rotierbar ist. Eine derartige erfindungsgemäße Delta-Mechanik mit mindestens zwei Gelenkarmen und drei Antrieben, die individuell ansteuerbar sind, kann der Träger entweder unmittelbar oder mittelbar unter Verwendung eines Blechs oder von Behältnissen oder dergleichen so mit Lebensmittelmasse von oben beaufschlagt werden, dass gekrümmte und/oder gerade Formen der abgelegten Lebensmittelmasse auf dem Träger erzeugt werden. Dies wird dadurch erreicht, dass drei individuell ansteuerbare Antriebe vorhanden sind und die Gelenkarme unter Zuhilfenahme einer Steuerkinematik auf verschiedene Weisen angesteuert werden können, sodass der Träger bewegt wird in einer Ebene in X/Y-Richtung und/oder auch rotiert wird. Dies erlaubt die Herstellung besonderer Formen der Lebensmittelmasse auf dem Träger bzw. einem Blech oder Behältnis oder dergleichen.

So können beispielsweise folgende Formen hergestellt werden:
Kreise oder Abschnitte eines Kreises,
konzentrische Kreise,
Abschnitte einer Spirale, mäandernde Formen,
Buchstaben und/oder Zahlen,
Kombination aus geraden und gekrümmten Formen, geometrische Freiformen bzw. definierte Sonderformen als Abbildung einer Vorlage, wie beispielsweise eine Engels-Figur, ein Tannenbaum, ein Logo.

Die Aufgabe wird ferner gemäß einem weiteren Aspekt gelöst durch ein Verfahren gemäß Anspruch 22. Dieses erfindungsgemäße Verfahren wird vorzugsweise angewendet unter Nutzung einer Vorrichtung der zuvor beschriebenen Art gemäß allen Ausprägungen der Erfindung aller Aspekte. Hinsichtlich der erreichten Vorteile der Vorrichtung und des Verfahrens und auch hinsichtlich der herstellbaren Produkte wird vollumfänglich auf die obigen Beschreibungen Bezug genommen.

Die zuvor beschriebenen erfindungsgemäßen Effekte und Vorteile der Vorrichtung werden gleichermaßen auch erreicht und die oben beschriebene Aufgabe wird gleichermaßen gelöst durch ein Verfahren mit den Merkmalen des Anspruchs 17. Hierbei handelt es sich um ein Verfahren zum Bereitstellen von Lebensmittelmasse auf einem Träger, insbesondere unter Verwendung einer Vorrichtung nach mindestens einem der vorstehenden Ansprüche, bei dem ein relativ zu einem Maschinen-Gestell bewegbar angeordneter Träger zum Aufnehmen von Lebensmittelmasse vorgesehen ist und der Träger mithilfe einer Antriebseinrichtung relativ zu dem Gestell bewegt wird, während mithilfe einer Abgabevorrichtung vorzugsweise portionierte Lebensmittelmasse auf den Träger abgegeben und dort abgelegt wird, wobei der Träger oberhalb von einer mechanischen Trenneinrichtung zum mechanischen Trennen von Träger und Antriebseinrichtung in Betrieb bewegt wird mithilfe einer unterhalb von der Trenneinrichtung angeordneten Antriebseinrichtung, wobei der Träger und die Antriebseinrichtung mit Hilfe von magnetischen und/oder elektromagnetischen Mitteln derart gekoppelt sind, dass durch magnetische oder elektromagnetische Kraft der Träger durch die Antriebseinrichtung bewegbar ist.

Zur Vermeidung von Wiederholungen wird vollumfänglich auf die obigen und nachfolgenden Beschreibungen der Vorrichtung und ergänzend zum Verfahren verwiesen.

Die erfindungsgemäße Vorrichtung und das Verfahren sind nachfolgend anhand von mehreren Ausführungsbeispielen unter Bezugnahme auf die Figuren beschrieben. Es zeigen:
- Fig. 1:: eine erfindungsmäße Vorrichtung mit einem Maschinen-Gestell und einem an diesem beweglich angeordneten Träger zum Aufnehmen von Lebensmittelmasse in einer perspektivischen Draufsicht;
- Fig. 2:: die Vorrichtung gemäß Fig. 1 in einer perspektivischen Ansicht von schräg unten mit unterhalb von einer mechanischen Trenneinrichtung angeordneter Antriebseinrichtung in einem ersten Ausführungsbeispiel;
- Fig. 3:: die Vorrichtung mit Antriebseinrichtung in einer Ansicht von unten;
- Fig. 4:: die Vorrichtung in einer Seitenansicht in einem Ausschnitt;
- Fig. 5:: den Ausschnitt der Vorrichtung in einer Teilschnittdarstellung von der Seite aus gesehen;
- Fig. 6:: ein alternatives Ausführungsbeispiel einer erfindungsgemäßen Vorrichtung mit einer alternativen Antriebseinrichtung zum Bewegen des Trägers oberhalb von der Trenneinrichtung mit einer Delta-Mechanik in einer perspektivischen Ansicht von unten;
- Fig. 7:: die Vorrichtung gemäß Fig. 6 in einer Ansicht von unten;
- Fig. 8:: ein weiteres Ausführungsbeispiel einer Vorrichtung in perspektivischer Ansicht von unten;
- Fig. 9:: die Antriebseinrichtung des Ausführungsbeispiels gem. Fig. 8 in perspektivischer Ansicht von schräg oben;
- Fig. 10:: die Antriebseinrichtung gem. Fig. 9 in Draufsicht;
- Fig. 11:: die Antriebseinrichtung gem. Fig. 9 in Ansicht von unten;
- Fig. 12:: die Maschine mit Antriebseinrichtung gem. Fig. 8 nebst mechanischer Trenneinrichtung von der Seite;
- Fig. 13:: eine vergrößerte Schnittdarstellung gem. A aus Fig. 12;
- Fig. 14:: eine erfindungsgemäße Portionsanordnung, hergestellt mittels einem erfindungsgemäßen Verfahren;
- Fig. 15:: weiteres Ausführungsbeispiel einer erfindungsgemäßen Portionsanordnung, hergestellt mittels erfindungsgemäßem Verfahren;
- Fig. 16:: weiteres Ausführungsbeispiel einer erfindungsgemäßen Portionsanordnung, hergestellt mittels erfindungsgemäßem Verfahren;
- Fig. 17:: weiteres Ausführungsbeispiel einer erfindungsgemäßen Portionsanordnung, hergestellt mittels erfindungsgemäßem Verfahren; und
- Fig. 18:: weiteres Ausführungsbeispiel einer erfindungsgemäßen Portionsanordnung, hergestellt mittels erfindungsgemäßem Verfahren.

Die in den Figuren gezeigte Vorrichtung 1 (oder Maschine) dient zum Bereitstellen von Portionen von Lebensmittelmasse, beispielsweise Teig, Wurstbrät, Käse oder dergleichen auf einem Träger 2 wie beispielsweise einem im Wesentlichen rechteckigen (Back-) Blech oder anderen Behältern wie Gläsern, oder Verpackungen oder dergleichen. Die Träger 2 sind hier exemplarisch ausgebildet als rechteckige Bleche, insbesondere Backbleche.

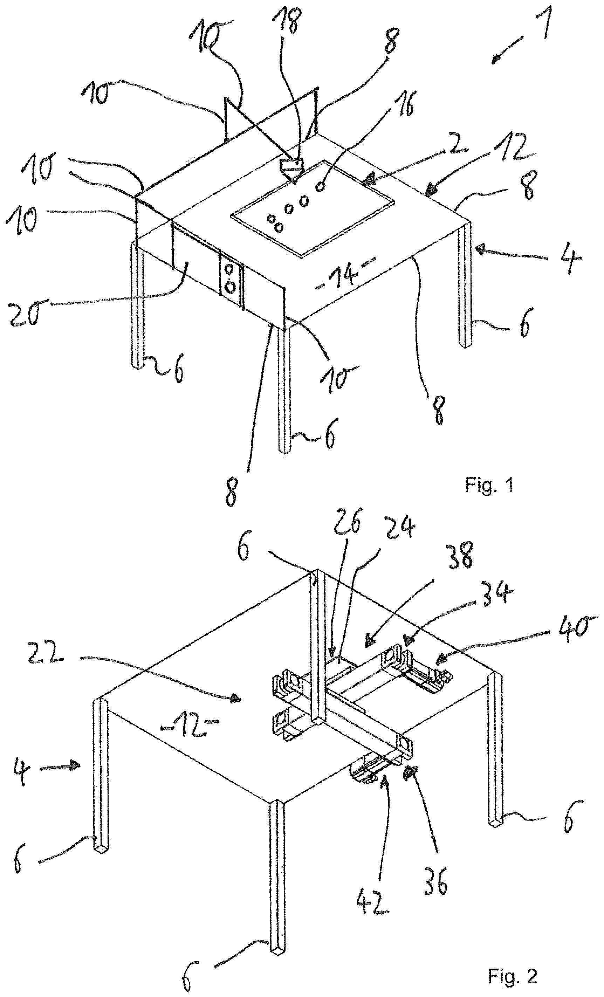

Die schematisch in insbesondere Fig. 1 gezeigte Vorrichtung weist ein Maschinen-Gestell 4 auf, welches vorzugsweise vier Beine 6 umfasst, die an ihrem unteren Ende in nicht gezeigter Weise auch mit Rollen zum Verfahren der Vorrichtung 1 aufweisen können. In bekannter Weise umfasst das Gestell 4 des Weiteren mehrere horizontale Streben 8 sowie weitere an den Streben 8 befestigte Montage-Stangen 10 auf. Das Gestell 4 kann je nach Bedarf an die jeweilige Konfiguration der Maschine und ergänzende Bauteile angepasst werden.

Eine mechanische Trenneinrichtung 12 ist an dem Gestell 4 montiert und ist exemplarisch als plattenförmiges Bauteil oder Platte 14 ausgebildet. Die Trenneinrichtung 12 weist zum Beispiel eine im Wesentlichen rechteckige Form oder Dicke im Bereich von 0,5 bis 3 mm auf. Sie kann aus verschiedenen Materialien wie beispielsweise einem nichtmagnetischen Werkstoff, insbesondere Metall, einer Metalllegierung insbesondere aus nichtrostendem Stahl wie V2A oder alternativ aus Kunststoff ausgebildet sein. Die als Platte 14 ausgebildete Trenneinrichtung 12 kann auch andere Formen, beispielsweise Quaderform oder eine sehr lange Form aufweisen.

Die Vorrichtung 1 umfasst ferner mindestens einen an dem Gestell 4 oder relativ zu dem Gestell 4 bewegbaren gelagerten oder angeordneten Träger 2 zum Aufnehmen von Lebensmittelmasse, insbesondere Portionen 16 aus Lebensmittelmasse auf. Der Träger 2 ist vorzugsweise als Back-Blech ausgebildet und kann optional einen Rand aufweisen. Der Träger 2 weist vorzugsweise eine im Wesentlichen ebene nach unten weisende Oberfläche und vorzugsweise ebenfalls eine im Wesentlichen ebene obere Oberfläche auf. Der Träger 2 liegt im Betrieb vorzugsweise flächig auf der als Platte 14 ausgebildeten Trennreinrichtung 12 auf und wird so von dieser getragen. Die Dimension des Trägers 2 ist - wesentlich- kleiner als die Dimension der Trenneinrichtung 12, sodass der Träger 2 in verschiedene Positionen relativ zu der plattenförmigen Trenneinrichtung 12 angeordnet werden kann durch Bewegung, wie unten näher erläutert ist. Auf der nach oben weisenden Oberfläche des Trägers 2 können mehrere Portionen 16 einer Lebensmittelmasse, beispielsweise Teig, Kekse oder dergleichen angeordnet werden. Die Portionen 16 sind nur exemplarisch und schematisch gezeigt. Sie können verschiedene Formen aufweisen, beispielsweise rund, eckig, oval oder dergleichen. Sie lassen sich in verschiedenen Positionen auf dem Träger 2 anordnen, beispielsweise in Reihen, mehreren Reihen, versetzt zueinander oder nahezu beliebigen Positionen. Alternativ kann der Träger auch als Behälter, als Glas, Blechbehälter, Schale aus Kunststoff oder dergleichen ausgebildet sein.

Die Vorrichtung 1 umfasst bevorzugt eine an sich bekannte Portioniereinheit zum Bereitstellen von Portionen aus Lebensmittelmasse oder im Ausführungsbeispiel als schematisch gezeigte Abgabevorrichtung 18 zum Abgeben von vorzugsweise portionierter fließfähiger Lebensmittelmasse auf. Mithilfe entsprechender Stangen 10 oder anderer mechanischer Befestigungsmittel ist die Abgabevorrichtung 18 ortsfest aber vorzugsweise auch in verschiedenen Positionen relativ zu dem Gestell 4 bzw. der Trenneinrichtung 12 positionierbar. Mithilfe der Abgabevorrichtung 18 lassen sich also vorzugsweise Portionen der Lebensmittelmasse abgeben. Im Ausführungsbeispiel ist die Abgabevorrichtung 18 als eine Düsenanordnung ausgebildet, mit der fließfähige Lebensmittelmasse abgegeben werden kann. In nicht gezeigter, aber bekannter Weise kann die Abgabevorrichtung mit einer Quelle von Lebensmittelmasse, vorzugsweise einem Behälter mittels Leitungen oder Schläuchen gekoppelt sein. Mithilfe einer nicht gezeigten Pumpe kann die Lebensmittelmasse kontinuierlich oder intermittierend gefördert und ggf. auch mithilfe von ansteuerbaren Ventilen abgegeben werden, sodass die Lebensmittelmasse in separaten Portionen 16 auf dem Träger 2 entstehen.

Anstelle einer schematisch gezeigten Abgabevorrichtung 18 kann diese auch als Portioniereinheit zum Bereitstellen anderer Portionen von Lebensmittelmasse ausgebildet sein oder auch als Förderband, mit dem einzelne Portionen beispielsweise herzustellende Kekse auf dem Träger 2 abgegeben werden können.

Eine Steuerung 20 mit mindestens einem Datenspeicher und mindestens einem Prozessor ist vorgesehen und im Ausführungsbeispiel ebenfalls an Stangen 10 oder anderen Befestigungsmitteln an oder relativ zu dem Gestell 4 montiert und dazu ausgebildet, einzelne Komponenten der Vorrichtung 1 anzusteuern, zu betätigen, Sensorsignale aufzunehmen und weiterzuverarbeiten und dergleichen. Die Steuerung umfasst in bekannter Weise mindestens eine Anzeigeeinrichtung und mehrere Bedienelemente und Schnittstellen zur Übertragung von Signalen und Daten. Es könnte auch eine Steuerung einer benachbarten Maschine entsprechend eingerichtet werden, um die Funktion einer Steuerung 20 auszuführen, die nachfolgend noch weiter beschrieben ist.

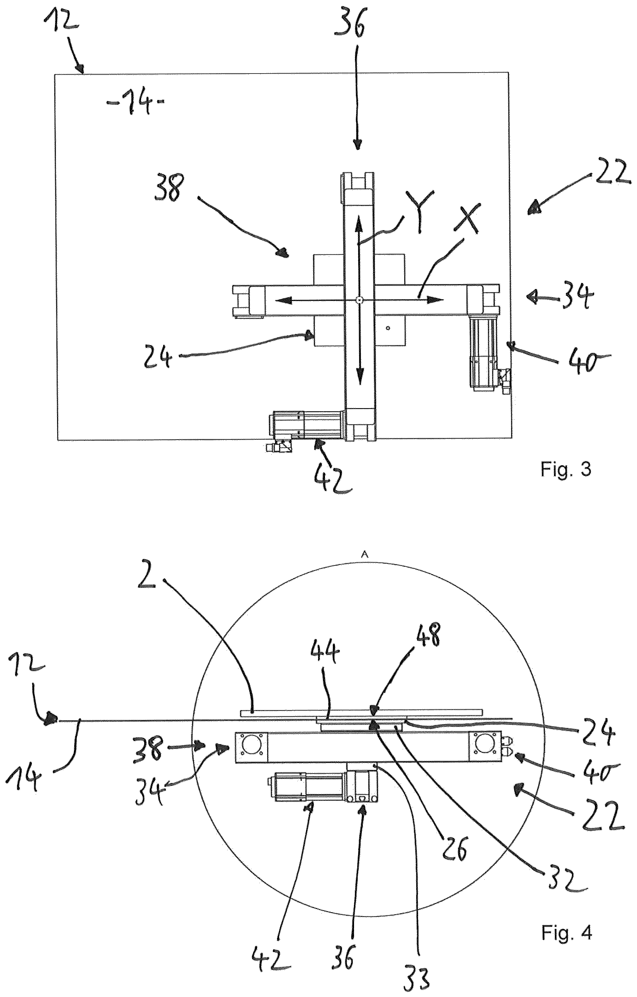

Wie Fig. 2 veranschaulicht, ist eine Antriebseinrichtung 22 vorgesehen und ausgebildet zum Bewegen des mindestens einen Trägers 2, im Ausführungsbeispiel zum Bewegen des Trägers 2 in einer horizontalen Ebene und in X/Y-Richtung. Die Antriebseinrichtung 22 ist in nicht näher gezeigter Weise an dem Gestell 4 und/oder der Unterseite der Trenneinrichtung 12, beispielhaft ausgebildet als Platte 14, angeordnet und gehalten. Hierzu können entsprechende mechanische Mittel wie Spangen, Schrauben Halterungen und dergleichen verwendet werden. Die Antriebseinrichtung 22 ist wenigstens teilweise, im Ausführungsbeispiel vollständig unterhalb der Trenneinrichtung 12 angeordnet. Die Antriebseinrichtung 22 ist so ausgebildet und konfiguriert, dass sie in der Lage ist, den Träger 2, der oberhalb von der Trenneinrichtung 12 auf dessen Oberseite angeordnet ist, in mehrere Richtungen, im Ausführungsbeispiel in X/Y-Richtung zu bewegen. Im Ausführungsbeispiel sind Antriebseinrichtung 22 und Träger 2 und auch die mechanische Trenneinrichtung 12 so ausgebildet, dass der Träger 2 und die Antriebseinrichtung 22 mit Hilfe von magnetischen und/oder elektromagnetischen Mitteln derart gekoppelt sind, dass durch magnetische oder elektromagnetische Kraft der Träger durch die Antriebseinrichtung 22 bewegbar ist. Zu diesem Zweck ist, wie nachfolgend exemplarisch beschrieben ist, die Antriebseinrichtung 22 mit mindestens einem Permanentmagneten oder elektromagnetischen Spulen ausgestattet, sodass eine magnetische oder elektromagnetische Kraft an verschiedenen Orten auf den Träger 2 aufgebracht werden kann, um diesen zu bewegen in der gezeigten horizontalen Ebene in X bzw. Y-Richtung auf der Oberseite der Platte 14. Zu diesem Zweck kann der Träger 2 selbst so ausgebildet sein, dass magnetische Kräfte auf ihn übertragen werden können oder an dem Träger 2 ist mindestens ein Permanentmagnet oder ist mindestens eine elektromagnetische Spule angeordnet, wobei in diesem Fall ein Permanentmagnet bevorzugt ist, oder ein Material für den Träger gewählt ist, der die Übertragung von Magnetkräften oder elektromagnetischen Kräften erlaubt. Auch die in Fig. 3 gezeigte Ansicht von unten bzw. die in Fig. 4 gezeigte Seitenansicht veranschaulichen die Antriebseinrichtung 22, die oberhalb davon angeordnete Trenneinrichtung 12, als Platte 14 ausgebildet, und den oberhalb von der Trenneinrichtung 12 angeordneten Träger 2.

Wie die Fig. 2 bis 5 veranschaulichen, weist das gezeigte Ausführungsbeispiel eine Antriebseinrichtung 22 auf, welche einen Magnet-Träger 24 und einen daran angeordneten Permanent-Magneten 26 aufweist. Der Träger 24 weist eine nach oben geöffnete Ausnehmung 28 zur Aufnahme des Magneten 26 auf; Ausnehmung 28 und Magnet 26 haben demgemäß entsprechende Formen, beispielsweise eine zylindrische oder rechteckige Form. Bevorzugt fluchtet die nach oben weisende Oberfläche des Magneten 26 mit der nach oben weisenden Oberfläche des Trägers 24. So liegt die nach oben weisende Oberfläche des Magneten 26 an der unteren Oberfläche der als Platte 14 ausgebildeten Trenneinrichtung 12 an oder ist sehr dicht beabstandet von dieser. Der Magnet-Träger 24 ist seinerseits bevorzugt an einem darunter angeordneten Montage-Block 30 befestigt, welcher mechanisch gekoppelt ist mit einem Läufer 32 einer ersten Linear-Führung 34. Die Linear-Führung 34 ist in an sich bekannter Weise so ausgebildet, dass der Läufer 32 und damit der Block 30 und letztlich der Träger 24 und Magnet 26 bewegbar in eine Richtung oder eine Achse (X) ist. Die Führung 34 ist an dem Gestell 4 angeordnet.

Die Linear-Führung 34 ist ihrerseits mit einer weiteren, senkrecht dazu angeordneten zweiten Linear-Führung 36 mechanisch gekoppelt, sodass die Führung 34 insgesamt auch in eine weitere Richtung oder in eine weitere Achse (Y) bewegbar ist. Insgesamt ist also der Träger 24 und Magnet 26 in X und Y-Richtung bewegbar ist. Auch die Führung 36 ist an dem Gestell 4 montiert. Die Führungen 34, 36 und die Bewegungsrichtungen oder Achsen X und Y sind auch in Fig. 3 erkennbar.

So ist insgesamt eine elektromechanische Führungseinheit 38 zum Verfahren des Magneten 26 in X/Y-Richtung im Wesentlichen in einer Ebene unterhalb der Trenneinrichtung 12 verwirklicht.

Die Antriebseinrichtung 22 umfasst ferner zwei unabhängig antreibbare und durch die Steuerung 20 ansteuerbare vorzugsweise Elektro-Motoren 40, 42 auf (vgl. Fig. 3), die wiederum in nicht näher gezeigter Weise elektrische Energie beziehen und durch entsprechende Signalleitungen mit der Steuerung 20 (Fig. 1) gekoppelt sind. Die jeweiligen Läufer 32, 33 der Linear-Führungen 34, 36 können so verfahren werden, um letztlich den Magneten 26 in X bzw. Y-Richtung bewegen und verfahren zu können unterhalb der Trenneinrichtung 12.

Der Träger 2 weist einen Magnet-Träger 44 auf, welcher eine Ausnehmung 46 aufweist, innerhalb welcher der mindestens eine Magnet 48 unmittelbar oberhalb der Oberseite der Trenneinrichtung 12 angeordnet ist. Der Magnet-Träger 44 ist mechanisch verbunden mit dem Träger 2, der bevorzugt als Backblech ausgebildet ist, beispielsweise durch Klebeverbindung oder durch Schweißverbindung oder Schraubverbindung.

Damit auch oberhalb von der Trenneinrichtung 12 an dem Träger 2 mittels des Magnet-Trägers 44 ein weiterer Permanent-Magnet 48 vorgesehen. Durch die beiden Magnete 26, 48 kann die magnetische Kraft übertragen werden von dem unteren Magneten 26 durch die Trenneinrichtung 12 hindurch auf den oberen Magneten 48, welcher mittels des Magnet-Trägers 44 mit dem Träger 2 für die Lebensmittelmasse gekoppelt ist. Auf diese Art und Weise kann sind magnetische Mittel vorgesehen, um die beschriebene magnetische bzw. alternativ auch elektromagnetische Kraft von der Antriebseinrichtung 22 durch die mechanische Trenneinrichtung 12 hindurch auf den Träger 2 übertragen zu können mittels der kooperierenden Magnete 26 bzw. 48. Gleichzeitig ist durch die Platte 14 ausgebildete Trenneinrichtung 12 eine vollständige mechanische Trennung zwischen dem Träger 2 und der Antriebseinrichtung 22 verwirklicht.

Durch Betätigen der Antriebseinrichtung 22 durch Ansteuern und Betätigen der Motoren 40, 42 lässt sich damit der Träger 2 in nahezu beliebige Positionen entlang der Oberfläche der als Platte 14 ausgebildeten Trenneinrichtung 12 verfahren und kann positioniert werden relativ zu der Stellung der Abgabevorrichtung 18, sodass die Lebensmittelmasse-Portionen an beliebigen Stellen auf dem Träger 2 aufgebracht werden können, bevorzugt abgeworfen werden können.

Wie bereits beschrieben, ist die Steuerung 20 eingerichtet, die Antriebseinrichtung 22 zum Bewegen des Trägers 2 und die Abgabevorrichtung 18 zum Abgeben von Lebensmittelmasse anzusteuern, dass Lebensmittelmasse in Portionen auf dem Träger 2 produziert werden können. Die Steuerung 20 steuert die Antriebseinrichtung 22 und die Abgabevorrichtung 18 so an, dass separate Portionen von Lebensmittelmasse in unterschiedlichen Anordnungen und/oder Mustern auf dem Träger 2 produziert werden, insbesondere in mehreren Reihen oder X- und/oder Y-Richtung versetzt zueinander angeordnet sind.

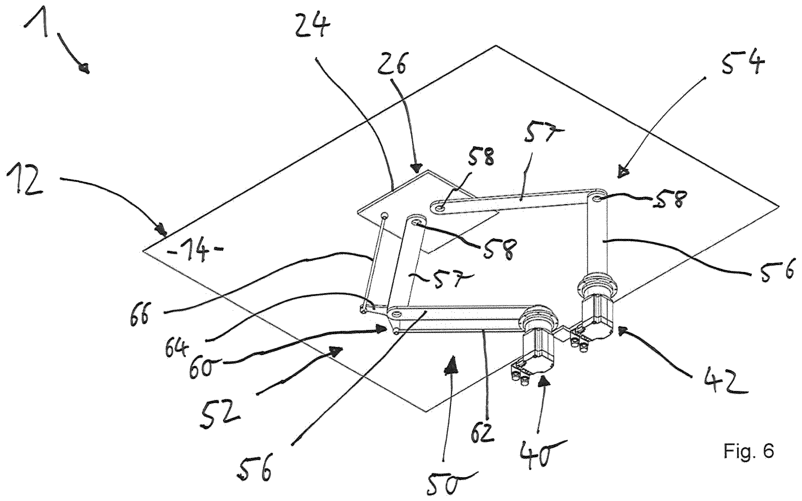

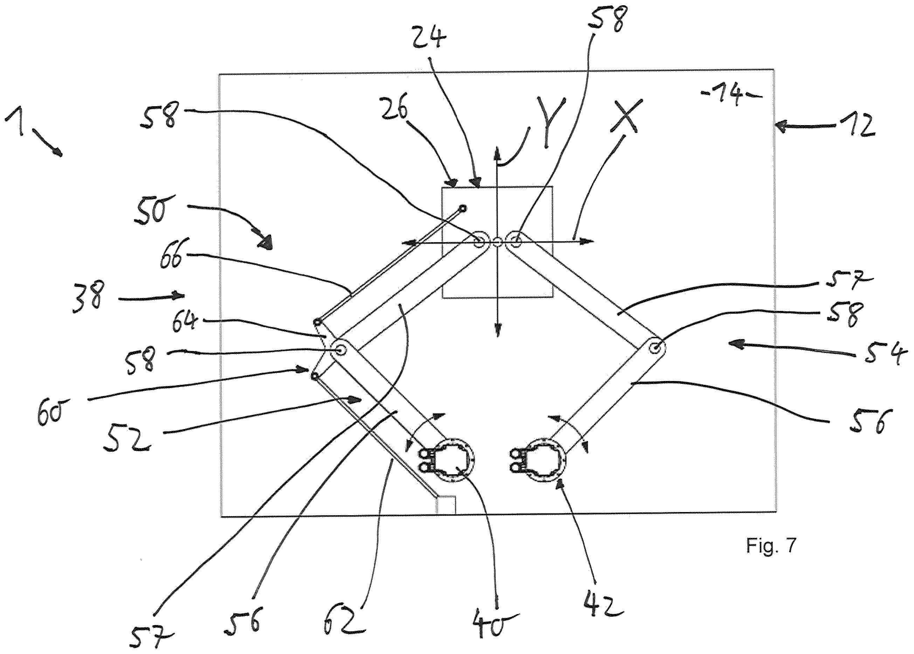

Fig. 6 und 7 zeigen eine alternative Vorrichtung 1, die prinzipiell gleich ausgebildet ist wie die zuvor anhand der Fig. 1 bis 5 beschriebene Vorrichtung 1, lediglich die Antriebseinrichtung 22 und Führungseinheit 38 sind nicht mit Linear-Führungen 34, 36 ausgestaltet, sondern als Delta-Mechanik 50 ausgebildet. Soweit gleiche oder funktionsgleiche Bauteile verwendet werden, wird auf die obigen Beschreibungen des ersten Ausführungsbeispiels der Vorrichtung 1 vollumfänglich Bezug genommen, welche gleichermaßen und sinngemäß gelten für das zweite Ausführungsbeispiel mit Delta-Mechanik 50; es werden nachfolgend zusätzliche Merkmale bzw. Unterschiede beschrieben.

Wie Fig. 6 und 7 veranschaulichen, weist die als Delta-Mechanik 50 ausgebildete Führungseinheit 38, welche unterhalb der als Platte 14 ausgebildete Trenneinheit 12 angeordnet ist, zwei jeweils an oder relativ zu dem Gestell 4 (Fig. 1) montierte Gelenkarme 52, 54 aufweist. Der Gelenkarm 52 hat einen ersten drehbar gelagerten, verschwenkbaren Arm 56, der mit seinem einem Ende drehbar relativ zu dem Gestell 4 gelagert und gekoppelt ist mit einem Elektro-Motor 40, sodass Arm 56 hin- und her verschwenkbar ist, wie durch den entsprechenden Doppelpfeil in Fig. 7 veranschaulicht. Am distalen Ende des Arms 56 ist ein zweiter Arm 57 mittels eines Gelenks 58 verschwenkbar angelenkt. Der zweite Arm 57 ist seinerseits drehbar mittels eines Gelenks 58 an dem Magnet-Träger 24 angelenkt. Entsprechend ist auch der Gelenkarm 54 ausgebildet, also mit einem ersten relativ oder an dem Gestell 4 verschwenkbar gelagerten Arm 56 und einem zweiten mittels eines Gelenks 58 an dem Arm 56 gelagerten zweiten Arm 57, welcher wiederum mit seinem distalen Ende mittels eines Gelenks 58 gelenkig verbunden ist mit dem Magnet-Träger 24. Arm 56 ist mittels des Motors 42 hin- und her verschwenkbar, wie durch den Doppelpfeil in Fig. 7 veranschaulicht.

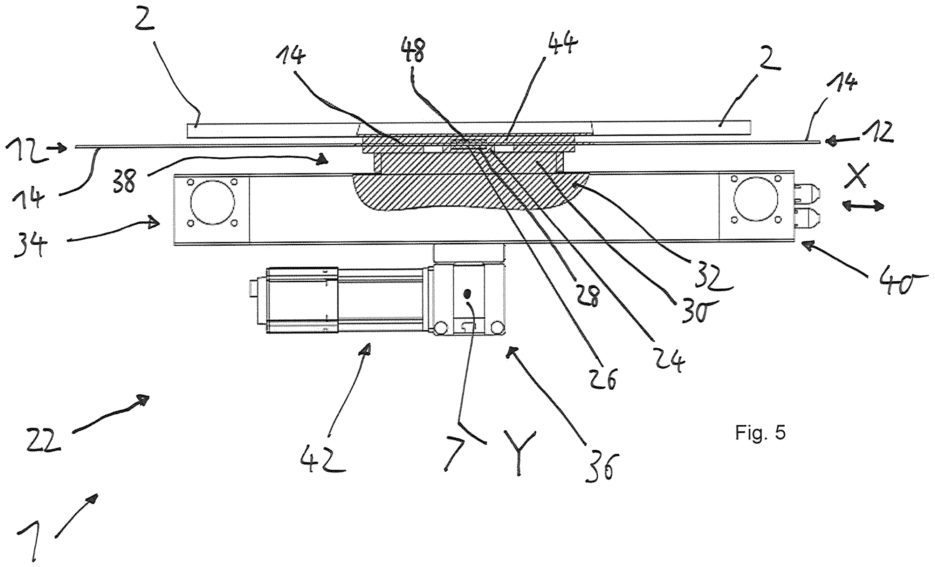

Eine Steuerkinematik 60 kooperiert mit dem Gelenkarm 52 und umfasst eine erste Steuerstange 62, die mit einem Ende mit dem Gestell 4 drehbar gekoppelt ist, einen zweiarmigen Steuerhebel 64, der seinerseits mittels des Gelenks 58 verschwenkbar mit den Enden der Arme 56, 57 gekoppelt ist, und eine Steuerstange 66, die einerseits mit einem Gelenk drehbar gekoppelt ist mit dem Steuerhebel 64 und anderseits drehbar gekoppelt ist mit dem Magnet-Träger 24. Die Kopplung der Steuerstange 66 und auch der Arme 57 mit dem Magnet-Träger 24 kann unmittelbar erfolgen oder auch mittels eines Montage-Blocks 30, wie in Fig. 5 anhand des ersten Ausführungsbeispiels gezeigt.

Mittels Ansteuerung durch die Steuerung 20 können die Motoren 40, 42 so betätigt werden, dass mittels der Gelenkarme 52, 54 und der Steuerkinematik 60, jeweils mit ihren einzelnen Bauteilen, der Magnet-Träger 24 und somit der eine Magnet 26 oder mehrere an den Magnetträger 24 angeordnete Magnete 26 unterhalb der Trenneinrichtung 12, ausgebildet als Platte 14, in beliebige Positionen in X und Y-Richtung verfahren werden, um die Magnete 26 zu bewegen und zu verfahren. Aufgrund der zuvor beschriebenen Kopplung mittels der magnetischen und/oder elektromagnetischen Mittel, insbesondere durch den Magnet 26 und den Magnet 48, welcher mit dem Träger 2 gekoppelt ist, wie in Fig. 5 insbesondere gezeigt, kann auch bei dem Ausführungsbeispiel mit Delta-Mechanik 50 (Fig. 6 und 7) erreicht werden, dass der Träger 2, vorzugsweise ausgebildet als Blech oder anderer Behälter, vollständig oder weitgehend oberhalb von der Trenneinrichtung 12 berührungslos bewegt und verfahren werden kann in X und Y-Richtung, um den Träger 2 in verschiedene Position relativ zu einer Abgabevorrichtung 18 (Fig. 1), einer Portioniereinheit oder anderen Mitteln zum Abgeben von Lebensmittelmasse auf den Träger 2.

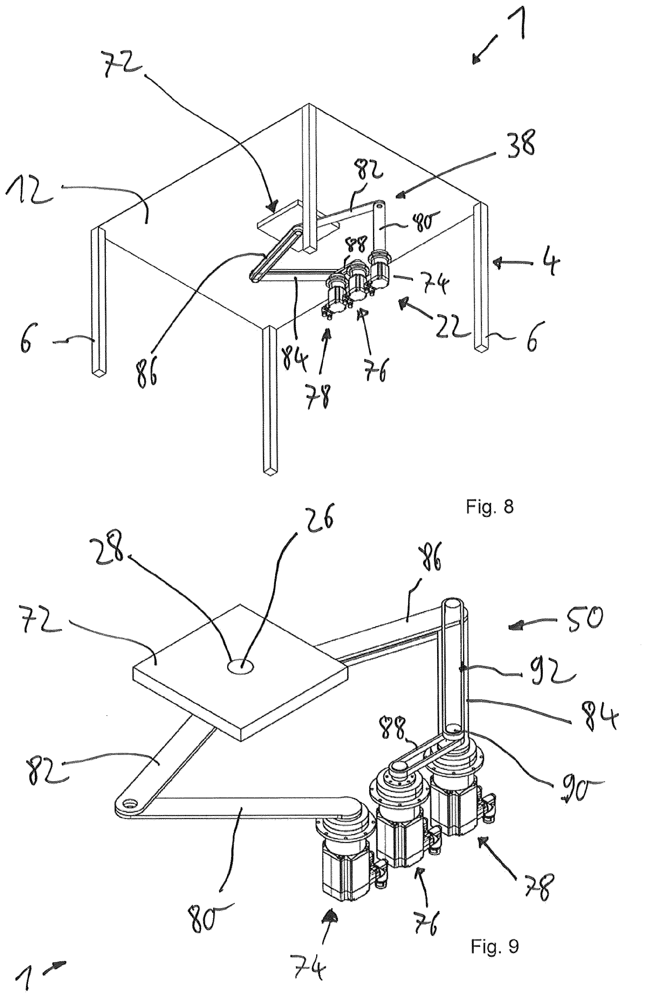

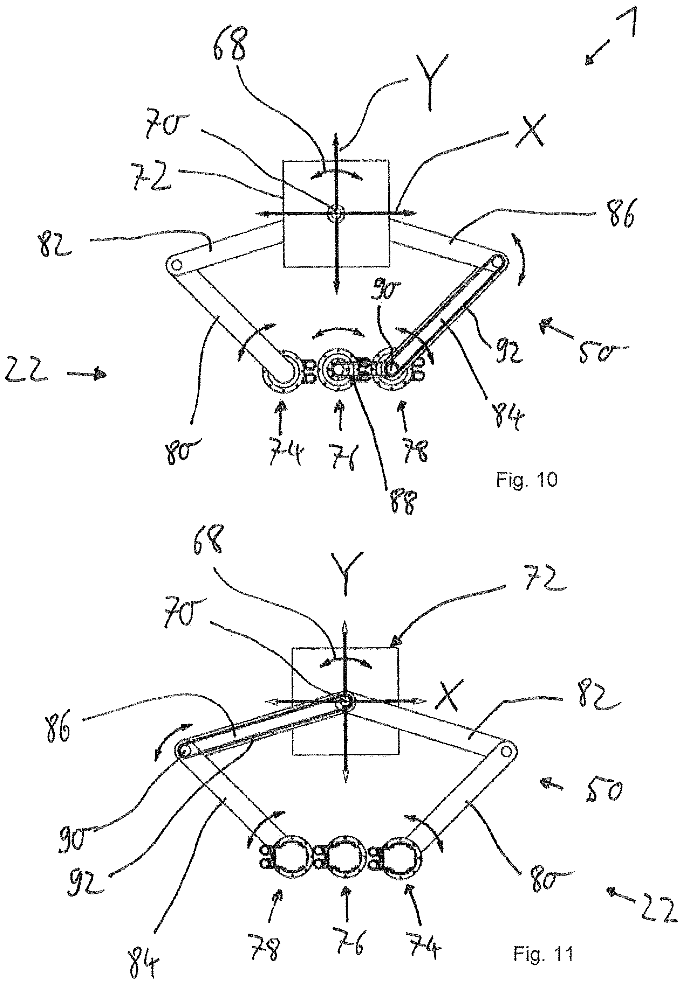

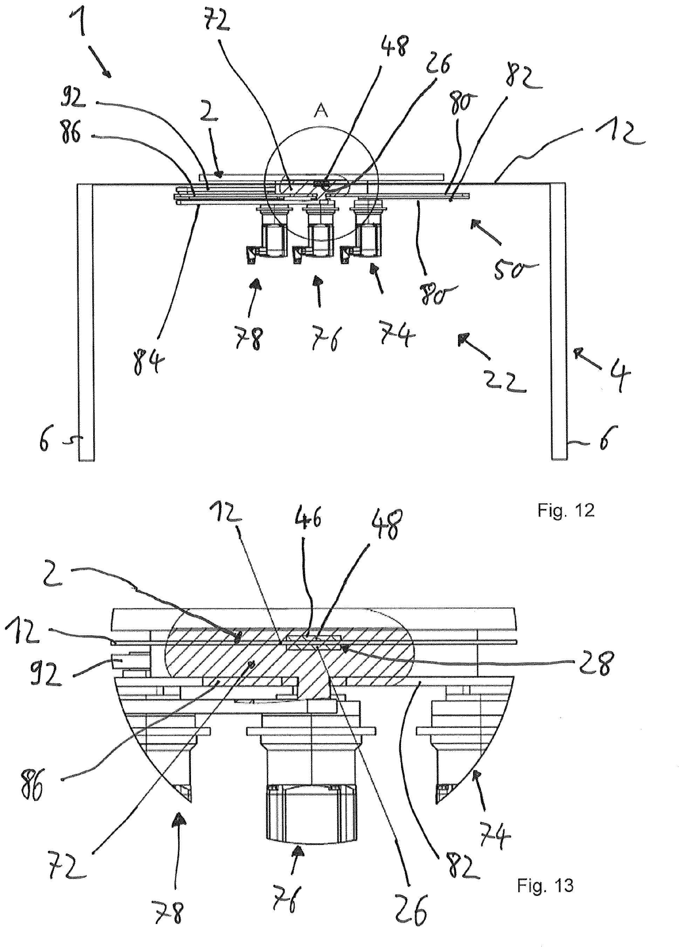

Das in den Fig. 8 bis 13 gezeigte alternative Ausführungsbeispiel einer Vorrichtung 1 zum Füllen und/oder Portionieren von Lebensmittelmasse auf einem Träger 2 unmittelbar bzw. auf einem Blech, Behälter oder dergleichen, welches auf dem Träger 2 angeordnet ist, weist eine Vielzahl von Ähnlichkeiten zu den zuvor beschriebenen Ausführungsbeispielen auf. Hinsichtlich der Ähnlichkeiten und gleicher oder ähnlicher Bauteile sind die gleichen Bezugszeichen verwendet worden und wird voll umfänglich auf die obigen Beschreibungen Bezug genommen. Die dargestellte Vorrichtung 1 weist ebenfalls einen oberen Träger 2 auf, der mittels einer Antriebseinrichtung 22 in X und Y Richtung bewegbar ist und auch rotierbar ist, angedeutet auch durch die Pfeile in den Fig. 10 und 11. Die mögliche Rotation ist durch den Pfeil 68 und die Rotationsachse 70 (Fig. 10 und 11) veranschaulicht, welche im Ausführungsbeispiel im Wesentlichen vertikal angeordnet ist. Fig. 8 und 12 zeigen auch die Anordnung des Antriebsblock 72 und der Antriebseinrichtung 22 nebst Führungseinheit 38 relativ zu dem Maschinengestell 4. Der Antriebsblock 72 ist mit der Antriebseinrichtung 22 auf unten genauer beschriebenen Weise gekoppelt. Erweist eine Ausnehmung 28 auf, innerhalb welcher ein Magnet 26 angeordnet ist.

Eine zuvor anhand des ersten Ausführungsbeispiels beschriebene mechanische Trenneinrichtung 12 (Fig. 8, 12, 13) ist als eine relativ dünne Platte aus Metall oder Kunststoff ausgebildet und ebenfalls am Maschinengestell 4 gelagert. Sie ist unmittelbar oberhalb des Magneten 26 und des Antriebsblocks 72 im Wesentlichen horizontal verlaufend angeordnet. Oberhalb von der Trenneinrichtung 12 ist ein Träger 2 angeordnet, der im Ausführungsbeispiel mit magnetischen Mitteln mit der Antriebseinrichtung 22 gekoppelt ist. Diese magnetische Kopplung mit magnetischen Mitteln ist im Ausführungsbeispiel so gestaltet, dass in einer unteren Ausnehmung 46 in dem Träger 2 ein Magnet 48 angeordnet und befestigt ist. Der Magnet 48 ist magnetisch wirkverbunden mit dem Magnet 26, der mit dem Antriebsblock 72 gekoppelt ist. Bei mithilfe der Antriebseinrichtung 22 bewirkter Bewegung des Antriebsblocks 72 und des Magneten 26 wird durch die Kopplung mithilfe von magnetischen und/oder alternativ auch teilweise elektromagnetischen Mitteln der Magnet 48 und damit auch der Träger 2 bewegt in Y und X Richtung und ggf. auch rotiert (Pfeil 68) um die Rotationsachse 70. Auf dem Träger 2 können Portionen von Lebensmittel unmittelbar oder auch mittelbar auf einem Blech, Behälter oder dergleichen angeordnet werden mithilfe einer Lebensmittel-Abgabevorrichtung 18, welche auch bei diesem Ausführungsbeispiel vorhanden ist und anhand des ersten Ausführungsbeispiels beschrieben ist (Fig. 1). Im Ausführungsbeispiel wird durch die Magneten 48 und 26 eine magnetische Kraft von der Antriebseinrichtung 22, genauer gesagt dem Antriebsblock 72 auf den Träger 2 übertragen, sodass dieser auf die beschriebene Weise bewegt werden kann. Alternativ kann auch insbesondere statt des Permanent-Magneten 26 eine elektrische Spule oder mehrere davon verwendet werden, um eine elektromagnetische Kopplung zu dem Permanent-Magneten 48 herzustellen, um die Kräfte für die erforderliche Bewegung des Trägers 2 zu erzeugen.

Erfindungsgemäß ist es auch, dass statt einem Magnet-Paar aus den Magneten 26, 46 mehrere entsprechende Magnet-Paare ausgebildet sind in dem Magnet-Träger 24 gemäß dem ersten Ausführungsbeispiel bzw. dem Antriebsblock 72 des zweiten Ausführungsbeispiels und dann entsprechend an den gegenüberliegenden Positionen an dem Träger 2. So können größere Kräfte übertragen werden und auch eine präzisere Führung der Bewegung des Trägers 2 verwirklicht werden. Beispielsweise können vier in einem Rechteck oder Quadrat angeordnete Magnet-Paare vorgesehen sein.

Wie die Fig. 8 bis 13 weiter veranschaulichen, weist die Antriebseinrichtung 22 drei als Elektro-Motoren ausgebildete Antriebe 74, 76, 78 auf, welche mit einer Delta-Mechanik 50 gekoppelt sind.

Antrieb 74 ist für eine rotatorische Bewegung mit Gelenkarm 80 gekoppelt, der wiederum mit seinem distalen Ende mit einem weiteren Gelenkarm 82 drehbar gekoppelt ist, welcher wiederum drehbar mit dem Antriebsblock 72 gekoppelt ist an der Rotationsachse 70.

Antrieb 78 ist mit einem Gelenkarm 84 gekoppelt, welcher wiederum mit seinem distalen Ende drehbar gekoppelt ist mit einem weiteren Gelenkarm 86, der wiederum mit seinem distalen Ende auch drehbar mit dem Antriebsblock 72 gekoppelt ist. Durch Antreiben der Antriebe 74 und 78 lässt sich mittels der Gelenkarme 80, 82; 84, 86 der Antriebsblock 72 und damit auch der Magnet 26 in X/Y-Richtung bewegen.

Der weitere Antrieb 76 treibt mittels eines ersten Riemens 88, einer Kopplungswelle 90 und einen zweiten Riemen 92, der mit einer Abtriebswelle im Bereich der Rotationsachse 70 mit dem Antriebsblock 72 gekoppelt ist, den Antriebsblock 72 rotatorisch an, sodass der Antriebsblock 72 und damit auch der Magnet 26 unmittelbar damit auch über den weiteren Magneten 48 der Träger 2 rotiert werden kann, angedeutet durch den Pfeil 68.

So ist insgesamt eine erfindungsgemäße Delta-Mechanik 50 realisiert, die eine Bewegung des Trägers 2 in X und Y Richtung und auch eine Rotation um eine Rotationsachse 70, angedeutet durch den Pfeil 68, ermöglicht und bewirkt durch entsprechende Ansteuerung der Antriebe 74, 76 und 78. Zur Ansteuerung der Antriebe, vorzugsweise ausgebildet jeweils als Elektro-Motoren, dient eine übliche, nicht näher dargestellte elektrische/elektronische Steuerung 20 der Vorrichtung 1.

Die Betriebsweise bzw. das erfindungsgemäße Verfahren erfolgen vorzugsweise unter Verwendung der zuvor beschriebenen Ausführungsbeispiele der Vorrichtung 1. Demgemäß wird ausgeführt ein Verfahren zum Bereitstellen von Lebensmittelmasse auf einem Träger 2, bei dem ein relativ zu einem Maschinen-Gestell 4 bewegbar angeordneter Träger 2 zum Aufnehmen von Lebensmittelmasse vorgesehen ist und der Träger 2 mithilfe einer Antriebseinrichtung 22 relativ zu dem Gestell 4 bewegt wird, während mithilfe einer Abgabevorrichtung 18 vorzugsweise portionierte Lebensmittelmasse auf den Träger 2 abgegeben und dort abgelegt wird, wobei der Träger 2 oberhalb von einer mechanischen Trenneinrichtung 12 zum mechanischen Trennen von Träger 2 und Antriebseinrichtung 22 in Betrieb bewegt wird mithilfe einer unterhalb von der Trenneinrichtung 12 angeordneten Antriebseinrichtung 22, wobei der Träger 2 und die Antriebseinrichtung 22 mit Hilfe von magnetischen und/oder elektromagnetischen Mitteln derart gekoppelt sind, dass durch magnetische oder elektromagnetische Kraft der Träger 2 durch die Antriebseinrichtung 22 bewegbar ist.

Insbesondere mit Hilfe einer Steuerung 20 lassen sich die Antriebseinrichtung 22, insbesondere die Motoren 40, 42 und auch eine Abgabevorrichtung 18 so ansteuern, dass der Träger wunschgemäß in Y und X-Richtung bewegt und positioniert wird, sodass Lebensmittelmasse, insbesondere individuelle Portionen in nahezu beliebigen Mustern auf dem Träger 2 bereitgestellt und dort abgelegt werden können, beispielsweise in eine oder mehreren Reihen, schachbrettartig versetzt zueinander oder dergleichen. Auch ist es möglich, mit einem weitgehend kontinuierlichen Abgeben einer fließfähigen Lebensmittelmasse von der Abgabevorrichtung 18 kontinuierliche, raupenartige Formen von Lebensmittelmasse auf dem Träger 2, insbesondere einem Blech, zu generieren, sei es geraden Linien oder beispielsweise mäanderförmigen, kreisförmigen, elliptischen oder rechteckigen Formen. Durch entsprechende Hinterlegung von Programmen oder Algorithmen in der Steuerung 20 kann die Führungseinheit 38 für den Magnetträger 24 und somit dann auch mittels des Magneten 48 der Träger 2 nahezu beliebig verfahren werden bei vollständiger hygienischer Trennung durch die als Platte 14 ausgebildete Trenneinrichtung 12.

Ein weiteres erfindungsgemäßes Verfahren wird ausgeübt mithilfe der Vorrichtung 1 gemäß den Fig. 8 bis 13. Mithilfe der Steuerung können die Antriebe 74, 76, 78, damit die Gelenkarme 80, 82, 84 und damit der Antriebsblock 72 und damit der mindestens eine Magnet 26 und damit mittelbar mithilfe von magnetischen oder elektromagnetischen Kräften auch der Magnet 48 und damit der Träger 2 in X und Y Richtung und auch rotatorisch um eine Rotationsachse 70 bewegt werden. Dadurch lässt sich der Träger entlang gerader und/oder gekrümmter Bahnen in nahezu beliebigen Bewegungsbahnen so bewegen, dass mithilfe einer Lebensmittel-Abgabevorrichtung 18 zum Abgeben von Strängen oder Punkten einer fließfähigen Lebensmittelmasse, aber auch von festen Lebensmittel-Portionen beliebige, gekrümmte und/oder gerade Formen der Lebensmittelmasse unmittelbar auf dem Träger oder auf einem Blech oder in einer Verpackung oder auf einer bereits abgelegten Lebensmittelanordnung platziert werden.

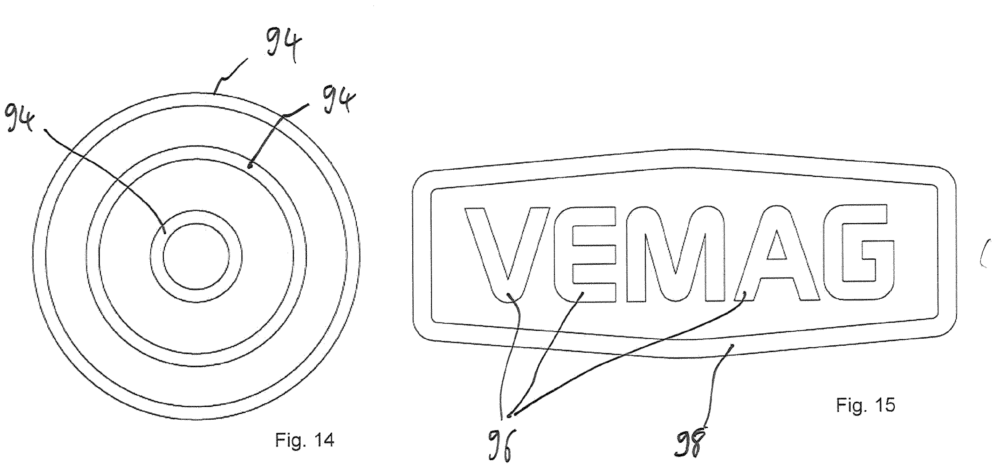

Exemplarisch zeigen die Fig. 14 bis 18 Ausführungsbeispiele erfindungsgemäß mithilfe der erfindungsgemäßen Vorrichtungen auf den Träger bzw. Blechen oder Behältern oder dergleichen abgelegte Formen der Lebensmittelmasse.

Fig. 14 zeigt mehrere konzentrische Kreise 94 aus Lebensmittel-Raupen, wobei die Kreise 94 verschiedene Durchmesser haben. Die Dicke der Raupen aus Lebensmittelmasse lässt sich variieren in Abhängigkeit von Einstellungen der Abgabevorrichtung 18. Offenbar haben die Kreise 94 einen gekrümmten Verlauf der Lebensmittelmasse.

Fig. 15 zeigt exemplarisch ein Logo, hier umfassend mehrere Buchstaben 96, die die Firma der Anmelderin bilden, umgeben von einem hier geschlossenen sechseckigen Rahmen 98von im Wesentlichen quadratischer Kontur. Sowohl die Buchstaben 96 als auch der Rahmen 98 weisen teilweise gerade Abschnitte der Lebensmittelmasse und gekrümmte Abschnitte der Lebensmittelmasse auf.

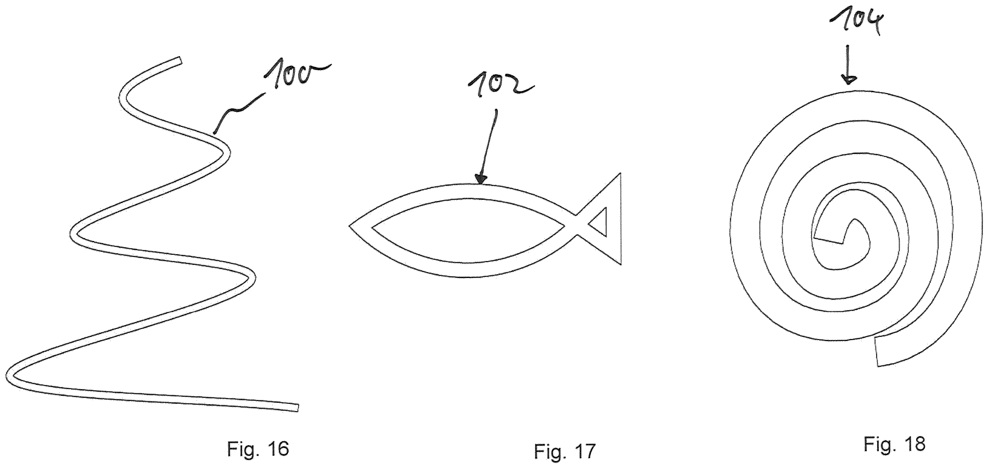

Fig. 16 zeigt exemplarisch eine mäandernde Form 100. Alternativ könnte die Form 100 auch eine Art Spirale sein. Auch diese Form 100 zeigt im Wesentlichen gekrümmte Abschnitte aber auch kleine Abschnitte, die im Wesentlichen gerade sind.

Fig. 17 zeigt exemplarisch eine Art Fisch-Form 102, die mittels des erfindungsgemäßen Verfahrens und der Anwendung der erfindungsgemäßen Vorrichtung 1 auf einem Träger 2 unmittelbar oder mittelbar hergestellt werden kann. Auch hier sind teilweise gerade und teilweise gekrümmte Abschnitte der Lebensmittelmasse verwirklicht.

Fig. 18 zeigt exemplarisch eine auf dem Träger 2 unmittelbar oder mittelbar erfindungsgemäß hergestellte Lebensmittelform als Spirale 104.

Es ist offensichtlich für eine Fachperson erkennbar, dass mithilfe der erfindungsgemäßen Vorrichtung aufgrund der Bewegbarkeit in X und Y Richtung und/oder auch einer Rotation des Trägers 2 nahezu beliebige Formen von Lebensmittelmasse auf dem Träger 2 unmittelbar oder mittelbar (Blech, Behälter oder dergleichen) herstellbar sind.

Die Erfindung wird ferner beschrieben anhand der nachfolgenden Ausführungsbeispiele, worin:
Ausführungsbeispiel 1. Vorrichtung (1) zum Füllen und/oder Portionieren von Lebensmittelmasse auf einem Träger (2), mit
einem Maschinen-Gestell (4),
einem an dem Gestell (4) bewegbar angeordneten Träger (2) zum Aufnehmen abgegebener Lebensmittelmasse, und
einer Antriebseinrichtung (22) zum Bewegen des Trägers (2),
**dadurch gekennzeichnet, dass**
   - eine mechanische Trenneinrichtung (12) zum mechanischen Trennen von Träger (2) und Antriebseinrichtung (22) vorgesehen ist,
   - dass der Träger (2) oberhalb von der Trennreinrichtung (12) angeordnet ist,
   - die Antriebseinrichtung (22) wenigstens teilweise unterhalb der Trenneinrichtung (12) angeordnet ist,
   - und dass der Träger (2) und die Antriebseinrichtung (22) mit Hilfe von magnetischen und/oder elektromagnetischen Mitteln derart gekoppelt sind, dass durch magnetische oder elektromagnetische Kraft der Träger (2) durch die Antriebseinrichtung (22) bewegbar ist.

Ausführungsbeispiel 2. Vorrichtung (1) nach Ausführungsbeispiel 1,
dadurch gekennzeichnet, dass die mechanische Trenneinrichtung (12) als Platte (14) mit einer im Wesentlichen ebenen oberen Oberfläche ausgebildet ist und der Träger (2) auf der Platte (14) aufliegt und im Betrieb entlang dieser mittels der Antriebseinrichtung (22) bewegbar ist.

Ausführungsbeispiel 3. Vorrichtung (1) nach Ausführungsbeispiel 2,
dadurch gekennzeichnet, dass die Platte (14) aus einem nicht magnetischen Werkstoff, insbesondere Metall, einer Metalllegierung, insbesondere aus nicht rostendem Stahl, oder Kunststoff ausgebildet ist und mittelbar oder unmittelbar an dem Maschinen-Gestell (4) gelagert ist.

Ausführungsbeispiel 4. Vorrichtung (1) nach mindestens einem der vorstehenden Ausführungsbeispiele,
dadurch gekennzeichnet, dass die Antriebseinrichtung (22) einen Magnet-Träger (24) und mindestens einen unterhalb von der Trenneinrichtung (12) angeordneten Permanent-Magneten (26) oder Elektro-Magneten aufweist, welcher an dem Magnet-Träger (24) der Antriebseinrichtung (22) angeordnet ist.

Ausführungsbeispiel 5. Vorrichtung (1) nach mindestens einem der vorstehenden Ausführungsbeispiele, dadurch gekennzeichnet, dass die Antriebseinrichtung (22) eine mechanische und/oder elektrische Führungseinheit (38) zum Verfahren des Magneten (26) in X/Y-Richtung im Wesentlichen in einer Ebene unterhalb der Trenneinrichtung (12) aufweist.

Ausführungsbeispiel 6. Vorrichtung (1) nach mindestens einem der vorstehenden Ausführungsbeispiele, dadurch gekennzeichnet, dass die Antriebseinrichtung (22) mindestens zwei unabhängig antreibbare Motoren (40, 42) zum Betätigen der Führungseinheit (38) aufweist.

Ausführungsbeispiel 7. Vorrichtung (1) nach Ausführungsbeispiel 5, dadurch gekennzeichnet, dass die Führungseinheit (38) als Delta-Mechanik (50) mit zwei Antrieben ausgebildet ist.

Ausführungsbeispiel 8. Vorrichtung (1) nach Ausführungsbeispiel 7, dadurch gekennzeichnet, dass die Delta-Mechanik (50) zwei Gelenkarme (52, 54) aufweist, wobei jeder Gelenkarm (52, 54) einen ersten drehbar gelagerten und mittels eines Motors (40, 42) verschwenkbaren ersten Arm (56) und einen zweiten, drehbar an dem ersten Arm (56) gelagerten zweiten Arm (57) aufweist, wobei der zweite Arm (57) seinerseits drehbar an dem Magnet-Träger (24) angelenkt ist.

Ausführungsbeispiel 9. Vorrichtung (1) nach mindestens einem der Ausführungsbeispiele 1 bis 6, dadurch gekennzeichnet, dass die Führungseinheit (38) zwei Linear-Führungen (34, 36) und zwei Antriebe zum Verfahren des Magnet-Trägers (24) in X/Y-Richtung aufweist.

Ausführungsbeispiel 10. Vorrichtung (1) nach Ausführungsbeispiel 9, dadurch gekennzeichnet, dass die Linear-Führungen (34, 36) mit ihren Längsachsen im Wesentlichen senkrecht zueinander angeordnet sind.

Ausführungsbeispiel 11. Vorrichtung (1) nach mindestens einem der vorstehenden Ausführungsbeispiele, dadurch gekennzeichnet, dass der Träger (2) einen Magnet-Träger (44) aufweist, welcher eine Ausnehmung (46) aufweist, innerhalb welcher der mindestens eine Magnet (48) unmittelbar unterhalb der Unterseite der Trenneinrichtung (12) angeordnet ist.

Ausführungsbeispiel 12. Vorrichtung (1) nach mindestens einem der vorstehenden Ausführungsbeispiele, dadurch gekennzeichnet, dass der oberhalb von der Trenneinrichtung (12) angeordnete Träger (2) mindestens einen Permanent-Magneten (48) aufweist.

Ausführungsbeispiel 13. Vorrichtung (1) nach Ausführungsbeispiele 12, dadurch gekennzeichnet, dass der mindestens eine an dem Träger (2) angeordnete Magnet (48) innerhalb einer an der Unterseite des Trägers (2) angeordneten Ausnehmung (46) angeordnet ist und unmittelbar oberhalb von der Trenneinrichtung (12) angeordnet ist, um im Betrieb mit mindestens einem Magneten (26) der Antriebseinrichtung (22) in Betrieb zusammenzuwirken und durch magnetische Kraft gekoppelt ist.

Ausführungsbeispiel 14. Vorrichtung (1) nach mindestens einem der vorstehenden Ausführungsbeispiele, gekennzeichnet durch eine Abgabevorrichtung (18) zum Abgeben von Lebensmittelmasse, die derart an oder relativ zu dem Maschinen-Gestell (4) angeordnet ist, dass abgegebene Lebensmittelmasse auf dem bewegbaren Träger (2) landet.

Ausführungsbeispiel 15. Vorrichtung (1) nach mindestens einem der vorstehenden Ausführungsbeispiele, gekennzeichnet durch eine Steuerung (20), die eingerichtet ist, die Antriebseinrichtung (22) zum Bewegen des Trägers (2) und die Abgabevorrichtung (18) zum Abgeben von Lebensmittelmasse anzusteuern, dass Lebensmittelmasse in Portionen auf dem Träger (2) produziert werden können.

Ausführungsbeispiel 16. Vorrichtung (1) nach Ausführungsbeispiel 15, dadurch gekennzeichnet, dass die Steuerung (20) die Antriebseinrichtung (22) und die Abgabevorrichtung (18) so ansteuert, dass separate Portionen (16) von Lebensmittelmasse in unterschiedlichen Anordnungen und/oder Mustern auf dem Träger (2) produziert werden, insbesondere in mehreren Reihen oder X und/oder Y-Richtung versetzt zueinander angeordnet sind.

Ausführungsbeispiel 17. Vorrichtung (1) zum Füllen und/oder Portionieren von Lebensmittelmasse auf einem Träger (2), mit
einem Maschinen-Gestell (4),
einem an dem Gestell (4) bewegbar angeordneten Träger (2) zum Aufnehmen abgegebener Lebensmittelmasse, und
einer Antriebseinrichtung (22) zum Bewegen des Trägers (2),
wobei die Antriebseinrichtung (22) unterhalb des Trägers (2) angeordnet ist, wobei die Antriebseinrichtung (22) eine Führungseinheit (38) aufweist, die mit dem Träger (2) mit mechanischen, elektrischen oder magnetischen Mitteln koppelbar ist, und wobei die Führungseinheit mindestens zwei Linear-Führungen oder Gelenkarme (52, 54) aufweist,
dadurch gekennzeichnet, dass die Linear-Führungen (34, 36) oder die Gelenkarme (52, 54) im Wesentlichen innerhalb einer Ebene angeordnet sind, welche unterhalb einer durch den Träger (2) definierten Ebene angeordnet sind.

Ausführungsbeispiel 18. Vorrichtung (1) nach dem Ausführungsbeispiel 17, dadurch gekennzeichnet, dass die Ebene im Wesentlichen parallel zu der durch den Träger (2) definierten Ebene angeordnet ist.

Ausführungsbeispiel 19. Vorrichtung (1) zum Füllen und/oder Portionieren von Lebensmittelmasse auf einem Träger (2), mit
einem Maschinen-Gestell (4),
einem an dem Gestell (4) bewegbar angeordneten Träger (2) zum Aufnehmen abgegebener Lebensmittelmasse, und
einer Antriebseinrichtung (22) zum Bewegen des Trägers (2),
dadurch gekennzeichnet, dass die Antriebseinrichtung (22) eine Führungseinheit (38) aufweist, die als Delta-Mechanik mit mindestens zwei Gelenkarmen und drei Antrieben ausgebildet ist, dass die Führungseinheit uns der Träger (24) miteinander gekoppelt sind, derart, dass der Träger im Wesentlichen innerhalb einer Ebene in X/Y-Richtung verfahrbar ist und mittels Ansteuerung der Antriebe rotierbar ist.

Ausführungsbeispiel 20. Verfahren zum Füllen und/oder Portionieren von Lebensmittelmasse auf einem Träger (2), insbesondere unter Verwendung einer Vorrichtung (1) nach mindestens einem der vorstehenden Ausführungsbeispiele, bei dem
ein relativ zu einem Maschinen-Gestell (4) bewegbar angeordneter Träger (2) zum Aufnehmen von Lebensmittelmasse vorgesehen ist und
der Träger (2) mithilfe einer Antriebseinrichtung (22) relativ zu dem Gestell (4) bewegt wird, während mithilfe einer Abgabevorrichtung (18) vorzugsweise portionierte Lebensmittelmasse auf den Träger (2) abgegeben und dort abgelegt wird, wobei der Träger (2) oberhalb von einer mechanischen Trenneinrichtung (12) zum mechanischen Trennen von Träger (2) und Antriebseinrichtung (22) in Betrieb bewegt wird mithilfe einer unterhalb von der Trenneinrichtung (12) angeordneten Antriebseinrichtung (22),
wobei der Träger (2) und die Antriebseinrichtung (22) mit Hilfe von magnetischen und/oder elektromagnetischen Mitteln derart gekoppelt sind, dass durch magnetische oder elektromagnetische Kraft der Träger (2) durch die Antriebseinrichtung (22) bewegbar ist.

Ausführungsbeispiel 21. Verfahren nach Ausführungsbeispiel 20,
bei dem die Kopplung bei Überschreitung einer bestimmten Kraft aufgelöst wird.

Ausführungsbeispiel 22. Verfahren zum Füllen und/oder Portionieren von Lebensmittelmasse auf einem Träger (2), insbesondere unter Verwendung einer Vorrichtung (1) nach mindestens einem der vorstehenden Ausführungsbeispiele, bei dem
ein relativ zu einem Maschinen-Gestell (4) bewegbar angeordneter Träger (2) zum Aufnehmen von Lebensmittelmasse vorgesehen ist und
der Träger (2) mithilfe einer Antriebseinrichtung (22) relativ zu dem Gestell (4) bewegt wird, während mithilfe einer Abgabevorrichtung (18) vorzugsweise portionierte Lebensmittelmasse auf den Träger (2) abgegeben und dort abgelegt wird,
wobei der Träger so relativ zu der mindestens einen Abgabevorrichtung (18) bewegbar ist, dass auf dem Träger entstehende Lebensmittelmasse wenigstens Abschnittsweise in einer gekrümmten Form abgelegt wird.

Ausführungsbeispiel 23. Verfahren nach Ausführungsbeispiel 22,
dadurch gekennzeichnet, dass die gekrümmten Abschnitte der Lebensmittelportion auf dem Träger mindestens eine der folgenden Formen aufweisen:
Kreise oder Abschnitte eines Kreises,
konzentrische Kreise,
Abschnitte einer Spirale,
mäandernde Formen,
Buchstaben und/oder Zahlen,
Kombination aus geraden und gekrümmten Formen,
geometrische Freiformen bzw. definierte Sonderformen als Abbildung einer Vorlage, wie beispielsweise eine Engels-Figur, ein Tannenbaum, ein Logo.

Ausführungsbeispiel 24. Verfahren nach mindestens einem der Ausführungsbeispiele 22 bis 23,
bei denen der Träger mithilfe der Antriebseinrichtung (22) entlang gekrümmter Bahnen bewegt und/oder rotiert wird, während Lebensmittelmasse auf dem Träger mithilfe der Abgabevorrichtung (18) abgelegt wird.

### Bezugszeichenliste

- 1: Vorrichtung
- 2: Träger
- 4: Maschinen-Gestell
- 6: Beine
- 10: Stangen
- 12: Trenneinrichtung
- 14: Platte
- 16: Portionen
- 18: Abgabevorrichtung
- 20: Steuerung
- 22: Antriebseinrichtung
- 24: Magnet-Träger
- 26: Magnet
- 28: Ausnehmung
- 30: Montage-Block
- 32: Läufer
- 33: Läufer
- 34: Linear-Führung
- 36: Linear-Führung
- 38: Führungseinheit
- 40: Elektro-Motor
- 42: Elektro-Motor
- 44: Magnet-Träger
- 46: Ausnehmung
- 48: Magnet
- 50: Delta-Mechanik
- 52: Gelenkarm
- 54: Gelenkarm
- 56: Arm
- 57: Arm
- 58: Gelenk
- 60: Steuerkinematik
- 62: Steuerstange
- 64: Steuerhebel
- 66: Steuerstange
- 68: Pfeil
- 70: Rotationsachse
- 72: Antriebsblock
- 74: Antrieb
- 76: Antrieb
- 78: Antrieb
- 80: Gelenkarm
- 82: Gelenkarm
- 84: Gelenkarm
- 86: Gelenkarm
- 88: Riemen
- 90: Kopplungswelle
- 92: Riemen
- 94: Kreise
- 96: Buchstaben
- 98: Rahmen
- 100: Form
- 102: Fisch
- 104: Spirale

## Patentansprüche

1. Vorrichtung (1) zum Füllen und/oder Portionieren von Lebensmittelmasse auf einem Träger (2), mit
einem Maschinen-Gestell (4),
einem an dem Gestell (4) bewegbar angeordneten Träger (2) zum Aufnehmen abgegebener Lebensmittelmasse, und
einer Antriebseinrichtung (22) zum Bewegen des Trägers (2),
**wobei** - eine mechanische Trenneinrichtung (12) zum mechanischen Trennen von Träger (2) und Antriebseinrichtung (22) vorgesehen ist,
- der Träger (2) oberhalb von der Trennreinrichtung (12) angeordnet ist,
- die Antriebseinrichtung (22) wenigstens teilweise unterhalb der Trenneinrichtung (12) angeordnet ist,
- und dass der Träger (2) und die Antriebseinrichtung (22) mit Hilfe von magnetischen und/oder elektromagnetischen Mitteln derart gekoppelt sind, dass durch magnetische oder elektromagnetische Kraft der Träger (2) durch die Antriebseinrichtung (22) bewegbar ist,
**dadurch gekennzeichnet, dass** die Antriebseinrichtung (22) eine mechanische und/oder elektrische Führungseinheit (38) zum Verfahren des Magneten (26) in X/Y-Richtung im Wesentlichen in einer Ebene unterhalb der Trenneinrichtung (12) aufweist, und wobei die Antriebseinrichtung (22) mindestens zwei unabhängig antreibbare Motoren (40, 42) zum Betätigen der Führungseinheit (38) aufweist.

2. Vorrichtung (1) nach Anspruch 1,
**dadurch gekennzeichnet, dass** die mechanische Trenneinrichtung (12) als Platte (14) mit einer im Wesentlichen ebenen oberen Oberfläche ausgebildet ist und der Träger (2) auf der Platte (14) aufliegt und im Betrieb entlang dieser mittels der Antriebseinrichtung (22) bewegbar ist.

3. Vorrichtung (1) nach Anspruch 2,
**dadurch gekennzeichnet, dass** die Platte (14) aus einem nicht magnetischen Werkstoff, insbesondere Metall, einer Metalllegierung, insbesondere aus nicht rostendem Stahl, oder Kunststoff ausgebildet ist und mittelbar oder unmittelbar an dem Maschinen-Gestell (4) gelagert ist.

4. Vorrichtung (1) nach mindestens einem der vorstehenden Ansprüche, **dadurch gekennzeichnet, dass** die Antriebseinrichtung (22) einen Magnet-Träger (24) und mindestens einen unterhalb von der Trenneinrichtung (12) angeordneten Permanent-Magneten (26) oder Elektro-Magneten aufweist, welcher an dem Magnet-Träger (24) der Antriebseinrichtung (22) angeordnet ist.

5. Vorrichtung (1) nach einem der vorstehenden Ansprüche,
**dadurch gekennzeichnet, dass** die Führungseinheit (38) als Delta-Mechanik (50) mit zwei Antrieben ausgebildet ist.

6. Vorrichtung (1) nach Anspruch 5,
**dadurch gekennzeichnet, dass** die Delta-Mechanik (50) zwei Gelenkarme (52, 54) aufweist, wobei jeder Gelenkarm (52, 54) einen ersten drehbar gelagerten und mittels eines Motors (40, 42) verschwenkbaren ersten Arm (56) und einen zweiten, drehbar an dem ersten Arm (56) gelagerten zweiten Arm (57) aufweist, wobei der zweite Arm (57) seinerseits drehbar an dem Magnet-Träger (24) angelenkt ist.

7. Vorrichtung (1) nach mindestens einem der Ansprüche 1 bis 4,
**dadurch gekennzeichnet, dass** die Führungseinheit (38) zwei Linear-Führungen (34, 36) und zwei Antriebe zum Verfahren des Magnet-Trägers (24) in X/Y-Richtung aufweist.

8. Vorrichtung (1) nach Anspruch 7,
**dadurch gekennzeichnet, dass** die Linear-Führungen (34, 36) mit ihren Längsachsen im Wesentlichen senkrecht zueinander angeordnet sind.

9. Vorrichtung (1) nach mindestens einem der vorstehenden Ansprüche, **dadurch gekennzeichnet, dass** der Träger (2) einen Magnet-Träger (44) aufweist, welcher eine Ausnehmung (46) aufweist, innerhalb welcher der mindestens eine Magnet (48) unmittelbar unterhalb der Unterseite der Trenneinrichtung (12) angeordnet ist.

10. Vorrichtung (1) nach mindestens einem der vorstehenden Ansprüche,
**dadurch gekennzeichnet, dass** der oberhalb von der Trenneinrichtung (12) angeordnete Träger (2) mindestens einen Permanent-Magneten (48) aufweist.

11. Vorrichtung (1) nach Anspruch 12,
**dadurch gekennzeichnet, dass** der mindestens eine an dem Träger (2) angeordnete Magnet (48) innerhalb einer an der Unterseite des Trägers (2) angeordneten Ausnehmung (46) angeordnet ist und unmittelbar oberhalb von der Trenneinrichtung (12) angeordnet ist, um im Betrieb mit mindestens einem Magneten (26) der Antriebseinrichtung (22) in Betrieb zusammenzuwirken und durch magnetische Kraft gekoppelt ist.

12. Vorrichtung (1) nach mindestens einem der vorstehenden Ansprüche, **gekennzeichnet durch** eine Abgabevorrichtung (18) zum Abgeben von Lebensmittelmasse, die derart an oder relativ zu dem Maschinen-Gestell (4) angeordnet ist, dass abgegebene Lebensmittelmasse auf dem bewegbaren Träger (2) landet.

13. Vorrichtung (1) nach mindestens einem der vorstehenden Ansprüche, **gekennzeichnet durch** eine Steuerung (20), die eingerichtet ist, die Antriebseinrichtung (22) zum Bewegen des Trägers (2) und die Abgabevorrichtung (18) zum Abgeben von Lebensmittelmasse anzusteuern, dass Lebensmittelmasse in Portionen auf dem Träger (2) produziert werden können.

14. Vorrichtung (1) nach Anspruch 15,
**dadurch gekennzeichnet, dass** die Steuerung (20) die Antriebseinrichtung (22) und die Abgabevorrichtung (18) so ansteuert, dass separate Portionen (16) von Lebensmittelmasse in unterschiedlichen Anordnungen und/oder Mustern auf dem Träger (2) produziert werden, insbesondere in mehreren Reihen oder X und/oder Y-Richtung versetzt zueinander angeordnet sind.

15. Verfahren zum Füllen und/oder Portionieren von Lebensmittelmasse auf einem Träger (2), insbesondere unter Verwendung einer Vorrichtung (1) nach mindestens einem der vorstehenden Ansprüche, bei dem ein relativ zu einem Maschinen-Gestell (4) bewegbar angeordneter Träger (2) zum Aufnehmen von Lebensmittelmasse vorgesehen ist und
der Träger (2) mithilfe einer Antriebseinrichtung (22) relativ zu dem Gestell (4) bewegt wird, während mithilfe einer Abgabevorrichtung (18) vorzugsweise portionierte Lebensmittelmasse auf den Träger (2) abgegeben und dort abgelegt wird, wobei der Träger (2) oberhalb von einer mechanischen Trenneinrichtung (12) zum mechanischen Trennen von Träger (2) und Antriebseinrichtung (22) in Betrieb bewegt wird mithilfe einer unterhalb von der Trenneinrichtung (12) angeordneten Antriebseinrichtung (22),
wobei der Träger (2) und die Antriebseinrichtung (22) mit Hilfe von magnetischen und/oder elektromagnetischen Mitteln derart gekoppelt sind, dass durch magnetische oder elektromagnetische Kraft der Träger (2) durch die Antriebseinrichtung (22) bewegbar ist, und
wobei die Antriebseinrichtung (22) eine mechanische und/oder elektrische Führungseinheit (38) zum Verfahren des Magneten (26) in X/Y-Richtung im Wesentlichen in einer Ebene unterhalb der Trenneinrichtung (12) aufweist, und wobei die Antriebseinrichtung (22) mindestens zwei unabhängig antreibbare Motoren (40, 42) zum Betätigen der Führungseinheit (38) aufweist.

16. Verfahren nach Anspruch 20,
bei dem die Kopplung bei Überschreitung einer bestimmten Kraft aufgelöst wird.
